# EUROPEAN PATENT APPLICATION

(11) **EP 4 024 076 A1**
(43) Date of publication of application: **06.07.2022**
(21) Application number: 21159218.3
(22) Date of filing: 25.02.2021
(51) Int. Cl.: G01S 7/02, H01Q 1/02, H01Q 1/06, H01Q 1/42, G01S 7/40, G01S 13/931

(54) **RADOME STRUCTURE HAVING HEATING AND LIGHTING FUNCTION AND METHOD THEREFOR**

(30) Priority: 30.12.2020 KR 20200187015
(71) Applicant: Intops. Co., Ltd., Anyang-si, Gyeonggi-do 14088 (KR)
(72) Inventor: HONG, Tae Yong, 14088 Anyang-si, Gyeonggi-do (KR); SEONG, Gyeom Son, 14088 Anyang-si, Gyeonggi-do (KR)
(74) Representative: M. Zardi & Co S.A.

(57) **Abstract**

A method for a radome structure having a heating and a light emitting function according to the present invention comprises forming a three dimensional shape with a film part comprising a film, and a light emitting circuit and a heating circuit printed on the film in a stack; cutting the film part, and integrating an upper cover, a lower cover, and the film part disposed between the upper and the lower cover, into one body using one of a bonding process or an injection-molding process.

## Description

### FIELD OF THE INVENTION

The present invention relates to a radome structure and, more particularly, to a radome structure having a heating and a light emitting function and a method therefor.

### BACKGROUND OF THE INVENTION

Automotive radar sensors have been developed since early 1970. In order to overcome vulnerabilities against dirt, dust, and inclement weather including rain, snow, fog, and others, a radar using millimeter wave has become widespread.

As automotive radars, there are an advanced radar capable of detecting objects located in a relatively long distance (200m) using 77GHz frequency, which is used in a forward collision warning system, and a regular radar detecting objects in a short and medium distance (100m) using 24GHz frequency, which is used for blind spot detection, a lane change system, and a bird view camera system.

Meanwhile, automotive radars are used in a filed of Adaptive Cruise Control (ACC). The Adaptive Cruise Control automatically adjusts the automobile by maintaining current speed even when a driver presses a button to increase the speed unless the speed is less than 40km/h. This system was first applied to automobiles in 1958 in the U.S. that have a lot of long-distance roads where drivers were required to drive for a long time. According to development of Driver Assistance System (DAS), a system automatically adjusting a safe distance from vehicle ahead, called an adaptive system, has been created, which is embodied by Lidar which measures a distance with light, Laser which measures a distance with laser, or ultrasonic wave.

An automotive radar sensor is normally provided as a form of module combining a radome, which is a convex cover or a housing covering and receiving the radar sensor on the front of the radar sensor, and a mount, which is attached directly to a car body in the rear of the radar sensor. Thus, an automotive radar sensor assembly technically indicates an integrated one body of a radome, a radar sensor, and a mount.

The radar sensor assembly is attached to a center grill of the front of the car, the lower part of the right and left front bumper of the car (in case of a parking assistance radar), or a wind shield. An emblem may be combined with a radome into one body for aesthetic purpose.

One of important functions required for a radome is to have heating function, which promptly remove ice, frost, water, and others to avoid deterioration of detection abilities of the radar sensor. In order to have this function, heating means such as a hot wire are attached or printed on a film using a complex injection process such as In Mold Labeling (IML) or In Mold Electronics (IME). Heating the cover by infrared rays or heating interior air by the heater are also used.

According to prior arts related to a heating structure of a radome, Korean Patent Publication No. 10-2016-0094936 discloses injection-molding, overmolding, or extrusion coating an elastic carrier formed by deposition or screen printing. Japanese Patent Publication No. 2019-137380 discloses a structure of a heating element made of carbon nano tube embedded in the cover. Korean Patent No. 10-2018-0025722 discloses a radome comprising a transparent substrate, an adhesive layer formed on the transparent substrate, and a graphene layer formed on the adhesive layer. This radome comprises a graphene heating device which is operated by electric current passing through the graphene layer when a certain voltage is applied to it.

However, it is required for a radome to have a light emitting function in design elements such as an emblem as well as its heating function. Japanese Patent Publication No. 2020-36189 discloses an emblem set with an emitting area; however, it uses glossy metal. U.S. Patent Publication No. 2018-0275269 discloses an assembly integrating an emblem structure and a radar device; however, it does not mention a light emitting function. There is an emblem set with a LED built in the back of the emblem; however, this structure is not related to a radome structure.

In consideration of the prior arts above, inventors have developed a radome structure for an automotive radar sensor, which enables a quick and precise manufacturing process of hot wires, expands functions, and uses of circuits, and receive them.

The present invention provides an automotive radome structure having a heating and a light emitting function, and a method of manufacturing this structure quickly and precisely.

Thus, the present invention has advantages against prior arts by providing a streamlined manufacturing process and a radome structure which can heat and emit light.

### SUMMARY OF THE INVENTION

The present invention provides a method for a radome structure having a heating and a light emitting function comprises forming a three dimensional shape with a film part comprising a film, and a light emitting circuit and a heating circuit printed on the film in a stack; cutting the film part, and integrating an upper cover, a lower cover, and the film part disposed between the upper and the lower cover, into one body using one of a bonding process or an injection-molding process.

The bonding process comprises preparing the upper cover;
manufacturing a lower assembly by insert-injection molding the film part and the lower cover, and bonding between the upper cover and the lower assembly.

The bonding process between the upper cover and the lower assembly comprises applying polyurethane (PUR) hot-melt adhesive on edges in a surface of at least one of the upper cover or the lower assembly, applying instant glue on a center, other than the edges, in a surface of at least one of the upper cover or the lower assembly, and bonding between the upper cover and the lower assembly, wherein the method further comprises forming an air vent in a back side of the lower cover by heat bonding.

The injection-molding process comprises performing a first injection molding by inserting the film part into an upper cover mold, injecting plastic resin into the upper cover mold, and forming the upper cover and the film part, and performing a second injection molding by inserting a terminal part into a lower cover mold, mounting the upper cover and the film part on the lower cover mold, injecting plastic resin into the lower cover mold, and forming the lower cover and the terminal part.

The upper cover is manufactured by a process comprising manufacturing a base of the upper cover using an injection-molding process; forming a UV hard coating layer on one side of the upper cover; forming a UV coating layer on the other side, the opposite side of the one side, of the upper cover; forming a partial painting layer in a portion excluding an emblem portion on the UV coating layer.

The film part is manufactured by a process comprising forming a deposition layer on a base film; forming the light emitting circuit on the deposition layer by screening printing conductive ink or fluorescent ink on the deposition layer; forming a protection coating layer on the light emitting circuit in order to protect the light emitting circuit and keep electrical insulation; forming the heating circuit by printing conductive ink capable of being screening-printed, and forming a protection coating layer in order to protect the heating circuit.

A step of the forming the three dimensional shape is performed by thermoforming, vacuum forming, or high-pressure forming, and the three dimensional shape is formed according to a shape of a product, and wherein a step of the cutting the film part is performed by cutting the film part according to the shape of the product.

The present invention provides a radome structure having a heating and a light emitting function, the radome structure comprising an upper cover manufactured by an injection-molding process; a film part including a light emitting circuit, a protection coating layer, and a heating circuit, which are printed on a film that a deposition layer is formed on, and a lower cover manufactured by an injection-molding process.

The light emitting circuit comprises light emitting and conductive ink in order to emit light at an automotive emblem or a designed grill.

The heating circuit comprises conductive ink in order to thaw frost, snow, or ice on an automotive emblem or a designed grill.

The radome structure further comprises a conductive terminal part penetrating the upper cover in order to connect to the light emitting circuit or the heating circuit.

The terminal part and at least one of the light emitting circuit or the heating circuit are electrically connected using a conductive tape or a rivet.

The radome structure further comprises an air vent formed in a back side of the lower cover.

### BRIEF DESCRIPTION OF THE DRAWINGS

FIG. 1 is an exploded perspective view of a radome structure of the present invention.
FIG. 2 is a sectional view showing a structure of an upper cover of the present invention.
FIG. 3A is a sectional view showing a structure of a film part of the present invention.
FIG. 3B is a sectional view showing a structure of a lower part of the present invention.
FIG. 4 is a sectional view showing a combination of the film part and the lower cover of the present invention.
FIG. 5 is a perspective view showing a combination of an upper part and the lower assembly of the present invention.
FIG. 6 is a sectional view showing an air vent which is bonded to a back side of the lower cover by heat bonding according to the present invention.
FIG. 7 is a drawing showing a double injection molding process of the present invention.
FIGs. 8A and 8B are sectional views showing shapes of a terminal part of the present invention.
FIGs. 9A to 9C are a drawing showing a radome structure which is manufactured by a method of the present invention.
FIG. 10 is a sectional view showing of a structure of an upper cover according to another embodiment of the present invention.

### DETAILED DESCIPTION EMBODIEMENTS OF THE INVENTIONS

Each embodiment according to the present invention is to help understanding of the present invention, and the present invention is not limited to these embodiments. The present invention may consist of a combination of at least one of respective component and respective function that is included in the embodiments.

A radome structure 1 of the present invention may be used in an adaptive cruise control sensor assembly but is not limited to. The radome structure can prevent a radar sensor from deteriorating its detection abilities caused by surrounding environment such as moisture and frost and can provide a light emitting function for aesthetic purpose.

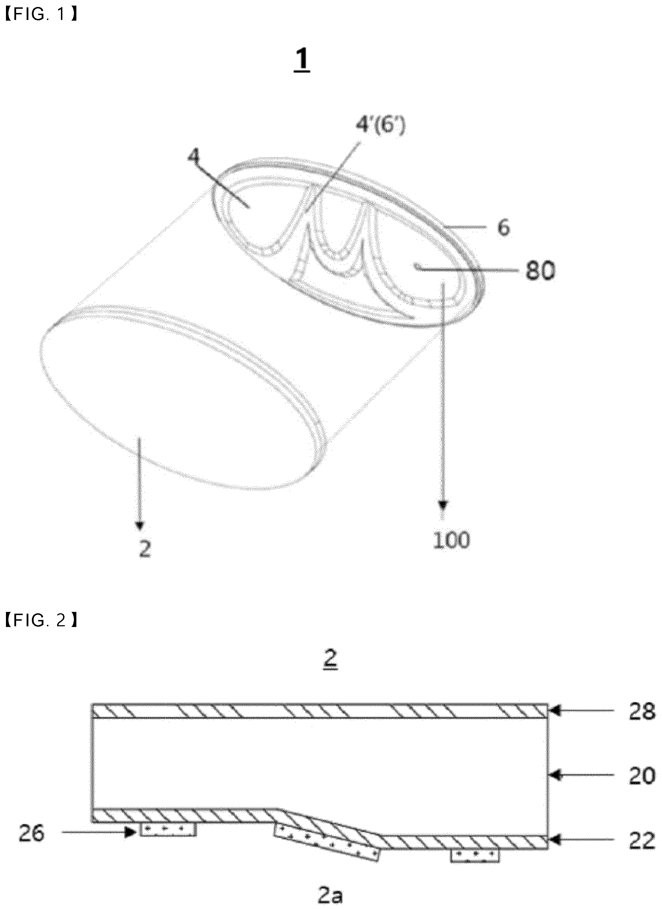

FIG. 1 is an exploded perspective view of a radome structure of the present invention. "Radome" means a cover or a covering to cover a sensor of an automobile, which transmits radar, LiDAR (Light Detection and Ranging), laser, and ultrasonic wave and receive reflective wave and sound. The radome shall be interpreted in a broad sense.

The radome structure 1 comprises an upper cover 2 in an upper part of the radome structure 1, a lower cover 6 in a lower part of the radome structure 1, and a film part 4 disposed therebetween. To embody an emblem, for example, a letter "M", a first emblem part 4', which is embossed in a three dimensional shape, and a second emblem part 6' having the same shape as that of the first emblem part 4' are formed in a convex shape toward the upper cover 2. The lower cover 6 and the film 4 are almost same shapes as shown in drawings. The lower cover 6 and the film 4 are manufactured into one body by an insert molding process because materials of the film 4 is different from the lower cover 6. Each of the upper cover 2 and the film 4 is a multi-layered complex structure as described later; however, the lower cover 6, which is made of single materials, is formed by a single process.

A structure and a manufacturing process of an upper cover 2 of the present invention are explained referring to FIG. 2. An upper portion in FIG. 2 is toward outside of an automobile.

First, a base 20 is manufactured by an injection molding process. The base 20 occupies most of the upper cover 2. Materials of the base 20 may be any plastic resins capable of being molded such as PC, PMMA(Acrylic), ABS, AES, and others. The base 20 is formed to have a shape and a structure which are matched with those of the lower cover 6. Accordingly, a back (not shown) of the base 20 is formed to have a three dimensional shape to receive the emblem.

Then, a coating layer 22 is formed on a first side, a bottom side of the base 20 which is toward the lower cover 6. It is desirable to perform UV coating as the coating process, which can reduce a processing time, does not need to wait for complete hardening, and can provide good durability and sustainability.

After that, a painting layer 26 is formed by a painting process in order to embody a designed color. The painting layer 26 is manufactured by transparent materials that laser or ultrasonic wave can pass through. The painting layer 26 is formed in a portion excluding an emblem portion on the UV coating layer 22. If necessary, a laser etching process can be performed on unnecessary part of the painting layer 26 after a painting process performed on the back side of the upper cover 2.

Lastly, a hard coating 28 is formed on a second side, a top side of the base 20, in order to protect a surface. It is desirable to perform UV coating for this coating process, which can reduce a processing time, does not need to wait for complete hardening, and can provide good durability and sustainability. In another embodiment, the hard coating 28 can be embodied by an insert molding process. In order to form the hard coating layer 28, a mold device can be used, which is disclosed in Korean Patent No. 10-1856441 by the applicant of the present invention.

A structure of the upper cover 2 of the present invention is determined by the base 20 which is first injection-molded. The layers described above are formed on surfaces of the base 20 according to the shape of the base 20.

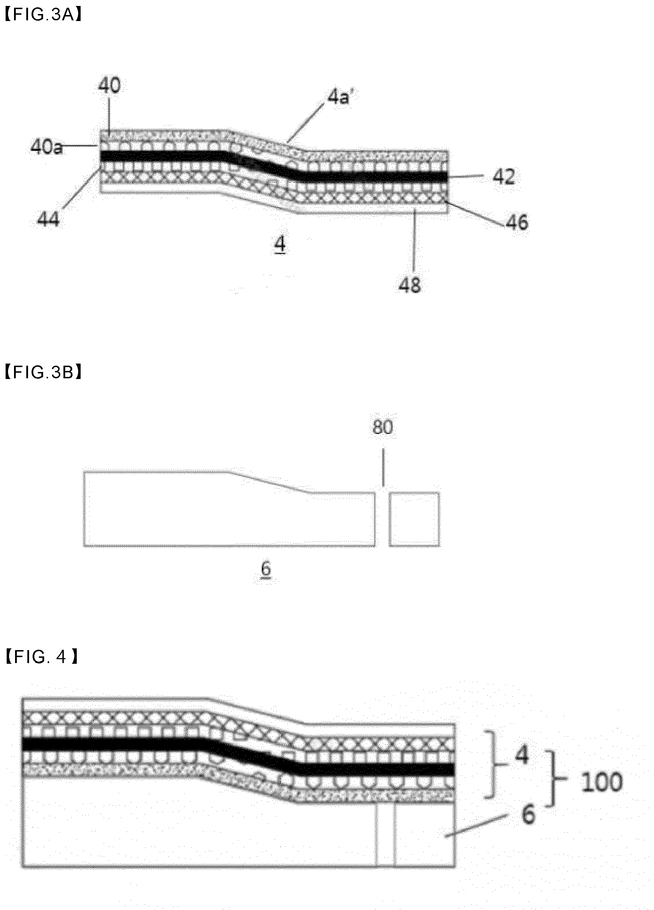

A structure and a manufacturing process of a film part 4 and a lower cover 6 of the present invention are explained referring to FIG. 3. Upper portions in FIGs. 3A and 3B are toward outside of a car.

Referring to FIG. 3A, the film 4 is a complex structure comprising a film 40, an indium deposition layer 40a, a light emitting circuit 42, a protection coating layer 44, a heating circuit 46, and a protection layer 48, which are stacked in order. A back side 2a of the upper cover 2 in FIG. 2 is corresponded to or matched with a front side 4a' of the film part 4 in FIG. 3A.

The film 40 can be made of any plastic resin capable of being molded, such as PET, PC, PMMA(Acrylic), ABS, AES, but it is preferable to have heat-resisting property. Materials of the complex layer including the film 40 is selected among those with proper strength and solidity enough to endure a forming process.

Then, a deposition layer 40a is formed on the film 40 through a deposition process. For example, the deposition layer 40a is formed with metal such as In, Al, or Ni. The deposition layer 40a is useful when forming a design corresponding to an emblem in the film part 4.

The light emitting circuit 42 is a structure of conductive electrode layers and a fluorescence substance disposed therebetween. When applying a certain voltage between both electrodes, the light emitting circuit 42 emits various color according to color of the fluorescence substance. All the steps for manufacturing the light emitting circuit 42 can be embodied by a screen printing process. The light emitting circuit 42 comprises light emitting and conductive ink in order to emit light at an automotive emblem or a designed grill. A pattern of the light emitting circuit 42 is arranged to surround an edge of a first emblem part 4' or arranged within an area of the first emblem part 4'; thereby the shape of the emblem can be expressed when a voltage is applied. In addition, the light emitting circuit 42 may be arranged to surround an outskirt of the lower cover 6. Generally, forming a conducting wire by printing conductive ink has lots of advantages against an etching process, but it is known that the wire formed by this process has a shortcoming of low electrical conductivity. However, unlike micro devices which require finely controlled current flow, the light emitting circuit 42 of the present invention can be operated with various ranges of conductivity because even low conductivity is enough to emit light and express a shape of the emblem. Accordingly, the pattern printing process is appropriate to manufacture light emitting circuit 42. Light can be embodied with various colors.

The protection coating layer 44 is made of non-conductive resin in order to protect the light emitting circuit 42 and the heating circuit 42 and to prevent from electrical short caused by contact between circuits.

The heating circuit 46 is made of conductive ink and has heating effects. Any conductive ink having electrical conductivity and capable of being screen printed can be used. The heating circuit 46 is made of conductive ink having a heating function in order to thaw frost, snow, or ice on an automotive emblem or a designed grill.

The protection layer 48 is formed in order to protect the film 40 and printing layers including the light emitting circuit 46 and the heating circuit 46. In other word, the protection layer 48 is coated to minimize damage to the film 40 and the printing layers, which is generated when performing a insert injecting molding process to manufacture the lower cover 6.

The film part 4 manufactured by the process above has a flat structure. Thus, the flat film part 4 including the first emblem part 4' is formed or molded to have a three dimensional shape and then cut. Specifically, the film part 4 is formed or molded to have the three dimensional shape by thermoforming, vacuum forming, or high-pressure forming, and then the formed or molded film is cut according to a shape of a product. FIG. 3 illustrates a film part 4 after the forming process and the cutting process.

In FIG. 3b, the lower cover 6 is manufactured by a single injection molding process according to a final shape of the film part 4 finishing the forming and cutting process. There is no subsequent layer necessary, and thereby no subsequent process is required. Materials of the lower cover 6 may be any plastic resins capable of being molded such as PET, PC, PMMA(Acrylic), ABS, AES, and others.

As illustrated in FIG. 3B, an air vent hole 80 can be formed through the lower cover 6 when the lower cover 6 is injection molded.

According to the present invention, the upper cover 2, the film part 4, and the lower cover 6 can be integrated into one body by forming the lower cover 6 and the film part 4 first and then bonding them to the upper cover 2.

In this case, the film part 4 is inserted into a mold; resin, which will be the lower cover 6, is injected into the mold; and then the lower cover 6 is formed by an insert injection process. Thus, the lower cover 6 is molded along with the film 4 by the insert injection process. The manufacturing process can be streamlined because a three dimensional shape of the film part 4 is identical to a shape of the lower cover 6, and they can be made using the same shape of the mold. In this process, the second emblem 6' is formed on the lower cover 6. A lower assembly 100 with the air vent hole 80 formed by the process described above is illustrated in a sectional view of FIG. 4.

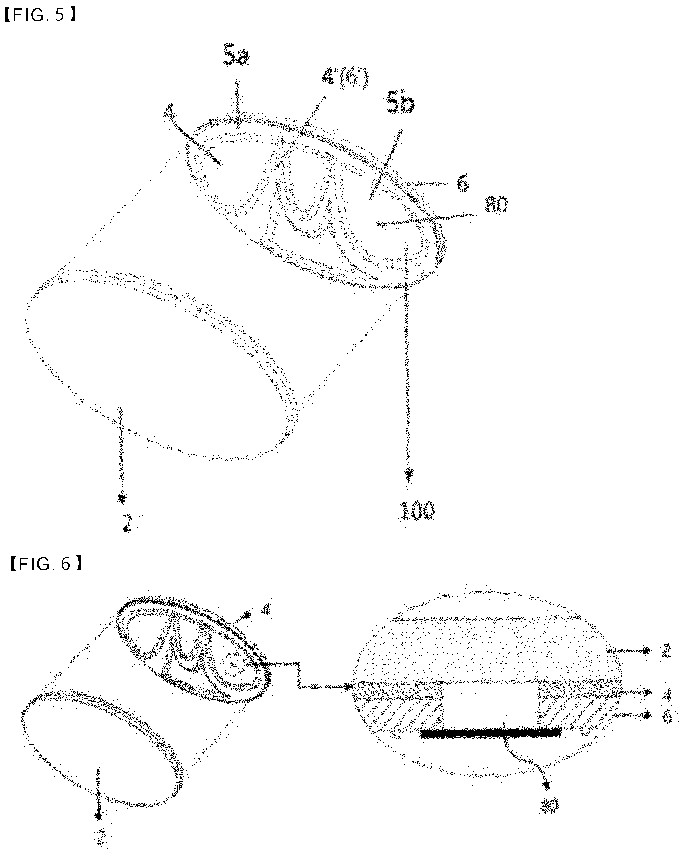

Then, as described in FIG. 5, through bonding, the upper cover 2 combines with the lower assembly 100, an integrated body comprising the film part 4 and the lower cover 6. The upper cover 2 is closely combined with the lower assembly 100 without gaps because concave/convex parts of a bottom surface of the upper cover 2 corresponds to convex/concave parts of a top surface of the lower assembly 100 which faces the bottom surface of the upper cover 2. In order to minimize gaps between the upper cover 2 and the lower assembly 100, an instant glue is applied on an inner area 5b. After bonding between the two members, a cruise control sensor cover 1 is completed.

FIG. 6 is another embodiment of the present invention. FIG. 6 illustrates a lower cover 6 with an air vent formed in a back side of the lower cover 6. The air vent is formed to cover an air vent hole 80 using a heat bonding process. The air vent has functions of removal of gas generated when bonding of the upper cover 2 and the lower cover 6 and prevention of moisture permeation.

Unlike the embodiment above, the upper cover 2, the film 4, and the lower cover 6 can be manufactured by a double injection molding process.

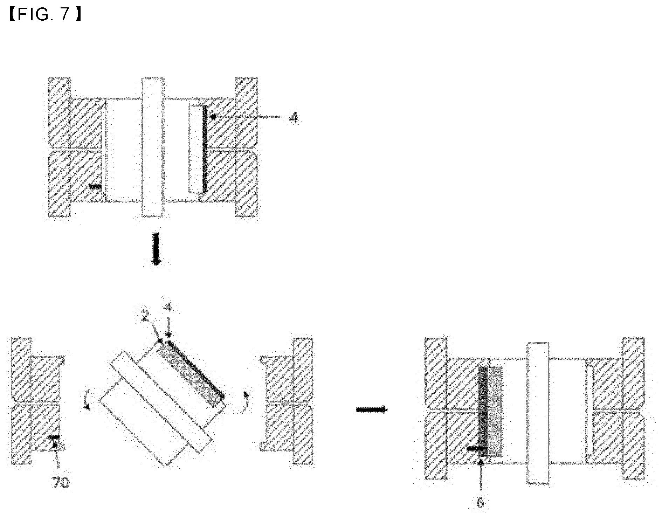

FIG. 7 illustrates the double injection molding process. A film part 4 is formed, cut, and inserted into an upper cover mold, and then the upper cover 2 is formed with the film part 4 by a first injection molding. Then, a terminal part 70 is inserted into a lower cover mold. A part of a mold on which the upper cover 2 and the film 4 are mounted is rotated and positioned in order that the upper cover 2 and the film part 4 face the lower cover mold. Then, plastic resin is injected, and the lower cover 6 and the terminal part 70 are formed by a second injection molding. Accordingly, the upper cover 2, the film part 4, and the lower cover 6 are manufactured into one body.

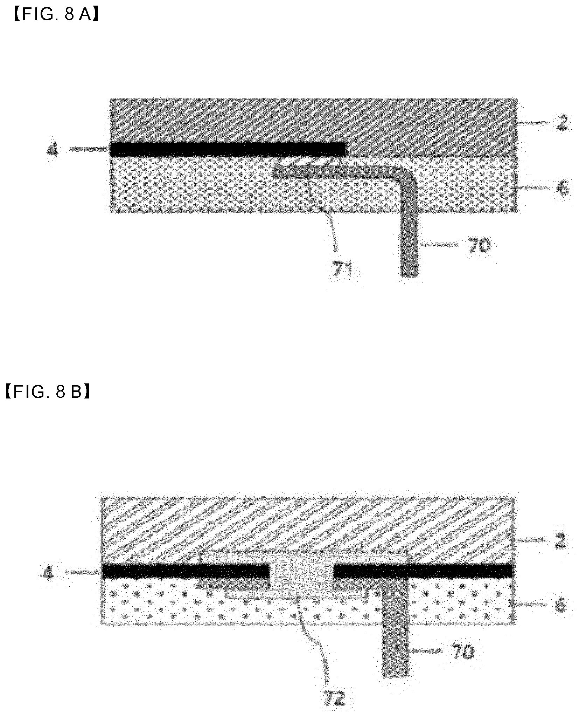

End portions of the light emitting circuit 42 and the heating circuit 46 are connected to the terminal part 70. The terminal part 70 is electrically connected to a mainboard which controls functions of the radar sensor and can be turned on/off by the control part of the radar sensor. Thus, the terminal part 70 and the film part 4 can be connected to each other with various means that power applies to. Like FIG. 8A, the terminal part 70 and the film part 4 can be connected to each other indirectly through a conductive tape 71. Like FIG. 8B, the terminal part 70 and the film part 4 can be connected to each other directly through a rivet 72. The control part turns on/off by detecting a degree of transmittance of a transmitter such as radar and surrounding environment such as current time, temperature, and others.

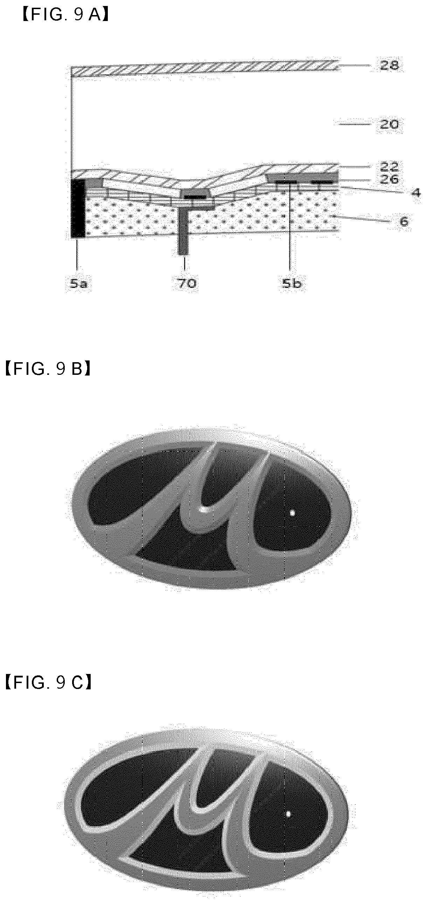

FIG. 9A is a final sectional view of a radome structure having a heating and a light emitting function of the present invention. The radome structure 1 is performed as a cover and a radar transmitting function when the power is turned off as illustrated in FIG. 9B; however, when the power is turned on, a periphery area of the emblem and inner edges of the lower cover 6, or the upper cover 2 emits light as illustrated in FIG. 9C and generate heat over the whole area of the emblem in order to remove frost or ice.

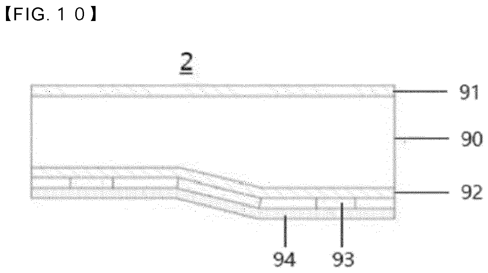

FIG. 10 is another embodiment of an upper cover 2 of the present invention. The upper cover 2 may be a multi-layered complex structure comprising a base 90, a hard coating layer 91 on a front side of the base 90, a UV coating layer 92 on a back side of the base 90, a partial deposition layer 93 for an emblem part, and a partial painting layer 94 excluding the partial deposition layer 93.

While embodiments of the present invention have been described, the present invention is not limited to what has been particularly shown. Many more modifications than mentioned above are possible. It would be apparent that the scope of the present invention includes scopes of appended claims, modifications, and variations.

## Claims

1. A method for a radome structure having a heating and a light emitting function, the method comprising:
forming a three dimensional shape with a film part comprising a film, and a light emitting circuit and a heating circuit printed on the film in a stack;
cutting the film part, and
integrating an upper cover, a lower cover, and the film part disposed between the upper and the lower cover, into one body using one of a bonding process or an injection-molding process.

2. The method of claim 1,
wherein the bonding process comprises:
preparing the upper cover;
manufacturing a lower assembly by insert-injection molding the film part and the lower cover, and
bonding between the upper cover and the lower assembly.

3. The method of claim 2, wherein the bonding process between the upper cover and the lower assembly comprises:
applying polyurethane (PUR) hot-melt adhesive on edges in a surface of at least one of the upper cover or the lower assembly,
applying instant glue on a center, other than the edges, in a surface of at least one of the upper cover or the lower assembly, and
bonding between the upper cover and the lower assembly,
wherein the method further comprises forming an air vent in a back side of the lower cover by heat bonding.

4. The method of claim 1,
wherein the injection-molding process comprises:
performing a first injection molding by inserting the film part into an upper cover mold,
injecting plastic resin into the upper cover mold, and forming the upper cover and the film part, and
performing a second injection molding by inserting a terminal part into a lower cover mold, mounting the upper cover and the film part on the lower cover mold, injecting plastic resin into the lower cover mold, and forming the lower cover and the terminal part.

5. The method of claim 1,
wherein the upper cover is manufactured by a process comprising:
manufacturing a base of the upper cover using an injection-molding process;
forming a UV hard coating layer on one side of the upper cover;
forming a UV coating layer on the other side, the opposite side of the one side, of the upper cover;
forming a partial painting layer in a portion excluding an emblem portion on the UV coating layer.

6. The method of claim 1, wherein the film part is manufactured by a process comprising:
forming a deposition layer on a base film;
forming the light emitting circuit on the deposition layer by screening printing conductive ink or fluorescent ink on the deposition layer;
forming a protection coating layer on the light emitting circuit in order to protect the light emitting circuit and keep electrical insulation;
forming the heating circuit by printing conductive ink capable of being screening-printed, and
forming a protection coating layer in order to protect the heating circuit.

7. The method of claim 6, wherein a step of the forming the three dimensional shape is performed by thermoforming, vacuum forming, or high-pressure forming, and the three dimensional shape is formed according to a shape of a product, and wherein a step of the cutting the film part is performed by cutting the film part according to the shape of the product.

8. A radome structure having a heating and a light emitting function, the radome structure comprising:
an upper cover manufactured by an injection-molding process;
a film part including a light emitting circuit, a protection coating layer, and a heating circuit, which are printed on a film that a deposition layer is formed on, and
a lower cover manufactured by an injection-molding process.

9. The radome structure of claim 8, wherein the light emitting circuit comprises light emitting and conductive ink in order to emit light at an automotive emblem or a designed grill.

10. The radome structure of claim 8, wherein the heating circuit comprises conductive ink in order to thaw frost, snow, or ice on an automotive emblem or a designed grill.

11. The radome structure of claim 8, wherein the radome structure further comprises a conductive terminal part penetrating the upper cover in order to connect to the light emitting circuit or the heating circuit.

12. The radome structure of claim 11, wherein the terminal part and at least one of the light emitting circuit or the heating circuit are electrically connected using a conductive tape or a rivet.

13. The radome structure claim 8, wherein the radome structure further comprises an air vent formed in a back side of the lower cover.

## Amended claims

### Amended claims in accordance with Rule 137(2) EPC.

1. A method for manufacturing a radome structure (1) having a heating and a light emitting function, the method comprising:
forming a three dimensional shape with a film part (4) comprising a film (40), and a light emitting circuit (46) and a heating circuit (46) printed on the film (40) in a stack;
cutting the film part (4), and
integrating an upper cover (2), a lower cover (6), and the film part (4) disposed between the upper and the lower cover (6), into one body using one of a bonding process or an injection-molding process,
**characterized in that** the film part (4) is manufactured by a process comprising:
forming a deposition layer (40a) on a base film (40);
forming the light emitting circuit (42) on the deposition layer (40a) by screening printing conductive ink or fluorescent ink on the deposition layer (40a);
forming a protection coating layer (44) on the light emitting circuit (42) in order to protect the light emitting circuit (42) and keep electrical insulation;
forming the heating circuit (46) by printing conductive ink capable of being screening-printed, and
forming a protection layer (48) on the heating circuit (46) in order to protect the heating circuit (46).

2. The method of claim 1, wherein the bonding process comprises: preparing the upper cover (2); manufacturing a lower assembly (100) by insert-injection molding the film part (4) and the lower cover (6), and bonding between the upper cover (2) and the lower assembly (100).

3. The method of claim 2, wherein the bonding process between the upper cover (2) and the lower assembly (100) comprises:
applying polyurethane (PUR) hot-melt adhesive on edges in a surface of at least one of the upper cover (2) or the lower assembly (100),
applying instant glue on a center, other than the edges, in a surface of at least one of the upper cover (2) or the lower assembly (100), and
bonding between the upper cover (2) and the lower assembly (100), wherein the method further comprises forming an air vent in a back side (2a) of the lower cover (6) by heat bonding.

4. The method of claim 1, wherein the injection-molding process comprises:
performing a first injection molding by inserting the film part (4) into an upper cover (2) mold, injecting plastic resin into the upper cover (2) mold, and forming the upper cover (2) and the film part (4), and
performing a second injection molding by inserting a terminal part (70) into a lower cover (6) mold, mounting the upper cover (2) and the film part (4) on the lower cover (6) mold, injecting plastic resin into the lower cover (6) mold, and forming the lower cover (6) and the terminal part (70).

5. The method of claim 1, wherein the upper cover (2) is manufactured by a process comprising:
manufacturing a base (20,90) of the upper cover (2) using an injection-molding process;
forming a UV hard coating layer (28,91) on one side of the upper cover (2);
forming a UV coating layer (22) on the other side, the opposite side of the one side, of the upper cover (2);
forming a partial painting layer (94) in a portion excluding an emblem portion on the UV coating layer (22).

6. The method of claim 1, wherein a step of the forming the three dimensional shape is performed by thermoforming, vacuum forming, or high-pressure forming, and the three dimensional shape is formed according to a shape of a product, and wherein a step of the cutting the film part (4) is performed by cutting the film part (4) according to the shape of the product.

7. A radome structure (1) having a heating and a light emitting function, the radome structure (1) comprising:
an upper cover (2) manufactured by an injection-molding process;
a film part (4) including a light emitting circuit (42), a protection coating layer (44), and a heating circuit (46), which are printed on a film (4,40) that a deposition layer (40a) is formed on, and
a lower cover (6) manufactured by an injection-molding process,
**characterized in that** the film part comprises:
a base film (4,40);
a deposition layer (40a) on the base film (40);
the light emitting circuit (42) on the deposition layer (40a) formed by screening printing conductive ink or fluorescent ink on the deposition layer (40a); and
a protection coating layer (44) on the light emitting circuit (42) for protecting the light emitting circuit (42) and keeping electrical insulation,
wherein the heating circuit (46) is formed by printing conductive ink capable of being screening-printed, and
wherein a protection layer (48) is formed on the heating circuit (46) in order to protect the heating circuit (46).

8. The radome structure (1) of claim 7, wherein the light emitting circuit (42) comprises light emitting and conductive ink in order to emit light at an automotive emblem or a designed grill.

9. The radome structure (1) of claim 7, wherein the heating circuit (46) comprises conductive ink in order to thaw frost, snow, or ice on an automotive emblem or a designed grill.

10. The radome structure (1) of claim 7, wherein the radome structure (1) further comprises a conductive terminal part (70) penetrating the upper cover (2) in order to connect to the light emitting circuit (42) or the heating circuit (46).

11. The radome structure (1) of claim 10, wherein the terminal part (70) and at least one of the light emitting circuit (42) or the heating circuit (46) are electrically connected using a conductive tape (71) or a rivet (72).

12. The radome structure (1) claim 7, wherein the radome structure (1) further comprises an air vent formed in a back side (2a) of the lower cover (6).
